# EUROPEAN PATENT APPLICATION

(11) **EP 1 932 982 A1**
(43) Date of publication of application: **18.06.2008**
(21) Application number: 06819984.3
(22) Date of filing: 15.09.2006
(51) Int. Cl.: E04H 6/22, E04H 6/18, B63C 1/08, B63C 15/00, B65G 1/10

(54) **RAISED MARINA**

(30) Priority: 16.09.2005 ES 200502260
(71) Applicant: Pérez-Ródenas Espada, Luis, 30009 Murcia (ES)
(72) Inventor: Pérez-Ródenas Espada, Luis, 30009 Murcia (ES)
(74) Representative: Carvajal y Urquijo, Isabel
(86) International application number: PCT/ES2006/000520
(87) International publication number: WO 2007/034015

(57) **Abstract**

The invention relates to a raised marina comprising a structure (1) and a series of crossmembers (7) having platforms (3, 31) fixed thereto for the berthing and launching of vessels (10, 11). The aforementioned platforms (3, 31) can be moved vertically and, in addition, the upper platforms (31) can be moved horizontally by means of telescopic arms (5) which are located outside the vertical plane of the lower platform (3). In another embodiment of the invention, the upper platforms (31') can be fixed, comprising telescopic arms (5') and a system of slir gs (40) which are connected to hoisting cables (4') which are wound in relation to winding devices (14') and which can be used to move vessels up and down outside the holsting system.

## Description

### Object of the invention

The present invention relates to a structure for the dry berthing of motor or sailing vessels on the water of the port, increasing the ber:hing capacity of the existing marinas and those being subsequently built.

### Background of the Invention

The field of the art to which the invention belongs is that of dry berthing for vessels.

The port facilities aimed at water sports in tourist environments, such as the Mediterranean shore, certain lakes, channels and navigable rivers (throughout this specification the sea is understood to be any navigable aquatic environment), are completely saturated. This situation of collapsing port facilities logically occurs in parallel to an unprecedented boom in the tourist sector and also in the hobby of water sports with thousands of new titles each year from the Patrón de Embarcaciones de Recreo (Recreational Boating Skipper). This situation of a great increase in hobbies and titles generates a proportional increase in the demand for berthings for sports vessels which the existing ports cannot attend, which has consequently caused an exceptional increase in the price of the berthings and leaves many vessel owners or enthusiasts with interest in purchasing them without the option of berthing even if they are prepared to pay very high prices for the berthings.

Constructing new marinas necessary for covering this demand has a wide list of insurmountable obstacles, among which the environmental type are highlighted, making it more and more difficult for competent administrations to grant new concessions for their construction. Within the environmental type limitations of the Mediterranean shore, the most important is without doubt the great prairie of Posidonia oceanica existing very close to the coast, virtually without points of discontinuity. Given the environmental importance of these prairies and the legal regulations protecting them, it is almost impossible to locate sites for new marinas.

There are currently vertical storage facilities for vessels ashore, those referred to as dry marinas. In these facilities an automotive lifting mechanism (fork-lift/lifting truck), picks up the vessel in the jetty of the port and lifts and moves it to shelves, generally inside industrial premises in which it deposits the m. Sailing vessels do not fit in these facilities unless the mast is disassembled. An example is mentioned in patent document ES 2063657.

The system described in this document has as man drawbacks the large space of dry land required: for the structure of the supports and or allowing the movement of the transport device and of the storage machine between the supports. Furthermore it only allows the berthing of motor launches.

Patent document ES 2063657 describes an installation to that respect, however it has a series of drawbacks and problems corresponding to the large space of dry land required for the structure of the supports, as well as for a lowing the movement of the transport means and of the storage machine between the supports, furthermore only allowing the berthing of motor launches and not of sailing vessels as was previously stated.

The system or installation described in this patent document ES 2063657, requires a large amount of space, which is unviable in the currently existing marinas, whereas for constructing new ports the previously mentioned drawbacks are presented.

Regarding conventional dock or jetty berthing, there are devices (US 6,470,816) which lift, by means of motor and cable mechanisms installed on piles, a single vessel a minimum height, enough so that the hull thereof is dry, such that this system does not only not increase the berthing capacity of the marinas, but rather reduces it upon having to increase the space needed for each vessel, there fore despite the fact that the deterioration problem of the hull of the vessel is prevented, the space for the berthing continues to be a problem.

There are also devices which, by means of injecting air into floaters (EP 96918512.3), achieve this effect of leaving the vessel dry, but these systems do not only not increase the berthing capacity of the marinas, but rather reduce it upon having to increase the space needed for each vessel. In other words they prevent the deterioration problem of the hull of the vessel, but not that cf space for berthing.

A utility model for an "Improved parking for vessels" (ES 1 015 101) was obtained in 1991, however because of its design it did not allow its installation in jetties, since it required dry land the jetty, to locate a large foundation and the movement of the upper vessel or vessels further forced the vessels located on the lower planes to be moved.

### Description of the Invention

Due to the difficulty of constructing new berthings and due to the willingness of the people demanding these berthings to pay very high prices, the use of structures and mechanisms which allow optimizing the current surface areas of the marinas intended for berthing, without needing to obtain new concessions or licenses, with the great advantage of not causing any negative impact on the environment is proposed as a solution.

To that end the invention has been carried out wh ch is referred to as a raised marina and is characterized by berthing vessels in two or more heights directly on the water of the marine port, lakeside area, river or of the car al, but in dry conditions, i.e., the vessels are not floating, although they occupy a conventional berthing post. Since the places need to be little wider than normal for the locating support structures supported on the marine bottom, the number of places is not duplicated (considering that only two heights are built) however an increase of about 75% is achieved.

With this invention not only is the increase of the berthing places achieved, but it is also achieved that the vessels are not in contact with the water, thus preventing the serious deterioration problems of the hull, making the annual maintenance tasks unnecessary and the vessel conserving a higher price in the case of a second sale. The invention allows its installation both in existing ports and those being newly constructed. If the savings in maintenance and the non-de preciation of the vessel are counted, a greater economic advantage is obtained for the user.

Because of the features of the sports vessels, those with sails having very high masts and those with motors being more compact, it will be the latter which will be located in the lower spaces, and those with sails in the upper space, the masts projecting on the bearing sructures.

If a space for the vessels with sails is not reserved, a greater number of spaces for motor vessels can be ranged.

The structures are formed by a series of columns joined two by two by a series of parallel crossmembers A series of platforms are supported on said crossmembers, there being a lower platform and one or more upper platforms located directly on the lower platform.

These platforms can be moved vertically in order to lower the vessels to the water, both platforms having to be sunk into the water in order to launch the vessel located therein or to berth new vessel.

The marine bottom (or lakeside,...) will have to have a draft which allows placing the lower platform below the upper platforms and thus still allow launching or berthing the vessels. This step can be made easier by making the different platforms able to couple with one another, reducing the draft used by the assembly of platforms.

For example, the upper platforms can have holes opposing the projecting elements of the lower platform, between which the elements supporting the vessel, referred to as cradles, are located.

Another solution for reducing the necessary draft and incidentally preventing moving the lower vessel, is having, at least in the crossmembers supporting the upper platforms, extendable telescopic arms for placing said upper platforms outside the vertical plane of the vessels located in the platforms located below. In the event of only arranging two levels, it must only be placed outside the vessel placed on the lower platform. Whereas in the event of having three platforms, the upper platform placed above the rest must be extended outside the vertical plane of the two lower vessels.

With the same objective as the telescopic arms, a inclined ramp, an elevator carrying out an oblique movement, or any other movement removing the upper platform from the vertical lane of the vessels placed below can be used.

An example of a method for lowering the platforms is using four metal cables or chains with enough thickness to support the weight of the platform and the vessel. However it is convenient hat said cables or chains do not have to support the weight for the time that the vessel is berthed, but rather that fixing and supporting elements are arranged, which elements fix the platforms in the raised position relieving the tension of the chains or cables.

Additional service which can be provided in he raised marina are the habitability of the vessels in their berthing position, for which there will be lifting elements in order to allow access to the vessels and the cleaning of the marine water present in the hull of the vessels by means of equipment for washing with fresh water and for drying. Thus the corrosion of the hull is reduced even more.

In a second embodiment of the invention, both the upper and lower platforms are fixed and the vessels are raised and lowered by means of a system of slings related to the cables for winding/unwinding, provided in their assembly on the corresponding crossmembers of the general structure.

It does not have to be said that the platforms can also be moved, especially the lower ones, in order to facilitate the berthing and launching maneuvers of said lower vessels and the upper vessels.

In the new addition to the mentioned main invention patent, it has likewise been provided that the platforms have the corresponding support cradles for the vessels, whereas the telescopic arms, sliding through corresponding bearings, are supported on corresponding guide beams provided for that purpose in the actual structure.

The system of slings for hoisting and/or lowering the vessels has the particularity that in order prevent the obstacle of the sall of the vessels, the cables of the sling of the bow can be hooked/unhooked in relation to the actual sling, a single operator being able to place it perfectly below the vessel and after its placement hooking the cables for the corresponding hoisting, since the sling of the stern is maintained without being unhooked, i.e. it can be easily positioned below the vessel given that on the stern there is no obstacle of the correspc nding sail or mast thereof.

In addition the fact that the movements of the telescopic arms as well as the hoisting/launching system, i.e. the system of slings, can be actuated by means of a device for actuating at a ireless distance must be emphasized.

It also must be emphasized that in order to compensate the torsional stresses to which each of the telescopic arms of the raised marine will be subjected, according to the improvements of the invention, the ends of a pair of collapsible metal lattices the length of which will correspond to the semi-width of the berthing will be installed, so that once the vessel is clutched, it will automatically be deployed in order to be located in the center being rigidly joined between them. Thus when tensing the cables, the torsional stresses are counteracted with the resistance to the rotation of the arms offered by the joined metal lattices.

It has optionally been provided that the structure can be complemented with rails which by way of a traveling crane allows all vessels with a same berthing alignment to be hoisted with a single lifting element, conveniently moving until stopping on the site of each vessel. Said traveling crane will longitudinally move through the rear part of the structure until reaching the site of the vessel to be hoisted or launched, an assembly of two telescopic arms similar to those referred to previously in order to carry out the functions in the same way, or a telescopic crane such as that provided in self loading trucks or automobile cranes being able to be installed, so that by means of a rocker arm and slings the vessel can be moved from its storage platform to the port water and vice versa.

In any case, in order to improve the performance of the crane and/or of the telescopic arms, supports on the outer edge of the structure demarcating each berthing will be provided in both solutions, such that the stresses transmitted are less. If more than two berthing floors are placed among those comprised between the first and the last floor, the support cradles will be installed on removable pallets or platforms such that one by one they can be completely outside the vertical plane of the structure and can be clutched by the lifting system both in the launching and in the berthing process.

The hoisting system in turn can be an amphibious lifting truck, i.e. in order to move on the marine bottom, the operation of which is similar to that of a conventional dry marina but installed on the port bottom. In order to save space for maneuvering and overturning stress, the vessel must be laterally secured in which case the storage platform will have drive means for moving the vessel to its rest position. In that case the system for clutching the lifting truck would allow the lateral movement.

It must also be mentioned that the raised marina with the improvement of the invention can have a drinking water inlet and electrical power outlet assembled on the actual structure so that the berthed vessels can fill their tanks and recharge the batteries.

It must also be said that the vessels can be protected by means of canvases or plastic which are fixed to hooking parts or elements provided in the structure, and the canvases or plastic of which can virtually be completely closed surrounding the vessel and protecting it from the sun, wind and rain, thus improving the protection against meteorological aggressions.

### Description of the Drawings

The following figures have been included in order to better understand the invention:
Figure 1 shows a front view of a raised marina in a simple embodiment with two platforms containing a motor vessel and a sailing vessel.
Figure 2 shows raised marina with the telescopic arms of the upper crossmembers deployed and the upper platform located halfway up.
Figure 3 shows a possible platform lifting installation. To that end it depicts a section of a telescopic arm.
Figure 4 shows an elevational view from the bow of a raised marina object of the present invention in which the clutching moment of a sailing vessel for its rear hoisting to the upper platform is depicted.
Figure 5 shows a side view of that depicted in Figure 4.
Figure 6 shows an upper plan view of a raised mar na providing the installation of a moving hoisting system common to all vessels with the same alignment.
Figure 7 shows a side view of the raised marina corresponding to that depicted in Figure 6, in which said marina is in operation, the vesse being located at the height of the upper platform.

### Description of Embodiments of the Invention

Several embodiments of the invention will be briefly described below as an illustrative and non-limiting example thereof.

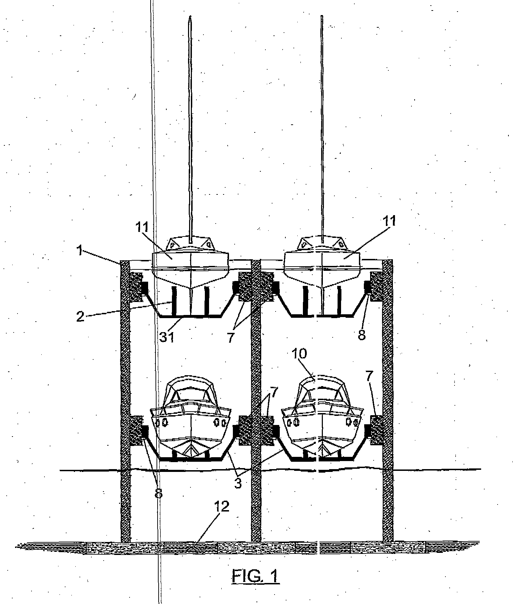

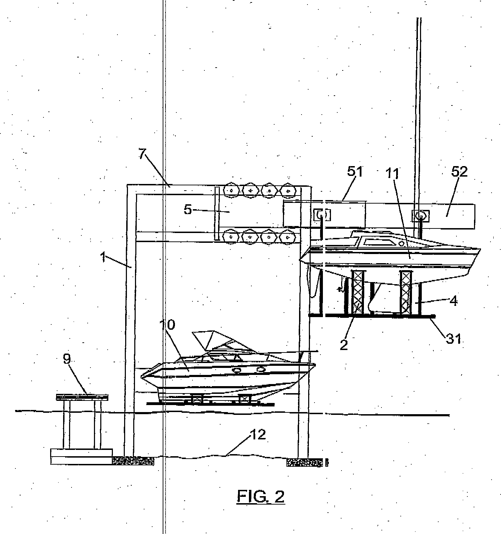

As observed in Figures 1 and 2, the invention is characterized by a structure (1), which can either be metal, concrete or mixed, built or a marine bottom (12) of the port (marine bottom is understood to be the bottom of the sea, lake, river, channel, reservoir,... in which the port is located), the alignment of which is arranged in parallel and placed against a jetty or dock (9). The structure (1) will be formed by a series of aligned columns forming a series of rectangles the smaller side of which is greater than the breadth of several sports vessels (10,11) which will vary in said structure (1), and the larger side of which is similar to the length of said vessels (10,11).

The structure (1) has inside each rectangle at least two moving platforms (3,31) placed at different heights in which the vessels (10,11) will be housed. To that end the platforms (3,31) have at least four cradles (2) on which the hull of said vessels (10,11) is supported. Said cradles (2) have, at an upper end in contact with the vessels (10, 11), a soft elastic material for not damaging the hull of the vessels (10,11). The sizes of these cradles (2) vary according to the type of vessel (10 11) intended to take ground in the platform (3,31) give that according to the type of vessel (10,11) the hull and the keel have different sizes.

The shape of the platforms (3,31) is irrelevant provided that it can be used for housing vessels (10,11). Figure 1 has thus depicted curved platforms (3,31) the edges of which are very close to the crossmember (7), whereas in Figure 2 the platforms (3,31) have been depicted as being planar.

It is necessary that the marine bottom (12) is at a depth or draft such that it allows maneuvering the vessels (10,11) even when the platforms (3,31) are submerged.

Each platform (3,31) in turn is joined to the structure (1) by means of two crossmembers (7), one at each side of the platform (3,31), fixed to the structure (1).

According to the simplest embodiment of the invention, the platforms (3,31) move only vertically. To that end cables (4) are fixed to the platform (3,31) and to the crossmembers (7), and are wound and unwound in paralle by means of one or several coordinated winding devices (14). For reasons of stability and load distribution it is convenient to place four or more cables per platform (3, 31). The method for winding and unwinding these cables (4) can be any known in :he state of the art, power multipliers, pulleys,... being able to be used in order to ensure the power needed to lift the vessels (10,11). An example of the installation of the motor will be described below

The simple embodiment is less practical as the number of vertically aligned platforms (3,31) increases. For that reason it is recommended to be used only in structures (1) with two platforms (3,31).

According to the simple embodiment, the upper vessel (10,11) must be berthed and grounded first, which will generally correspond to a sailing vessel (11). Once the sailing vessel (11) is berthed, an upper platform (31) is lifted and the berthing and grounding of the lower vessel (10,11) is allowed, which will generally correspond to a motor vessel (10). Once said motor vessel (10) is placed n position the lower platform (3) will be lifted until the motor vessel (10) takes ground.

For launching or de-berthing, the motor vessel (10) will have to be first launched, even if it is temporarily, given that on the contrary it could not support launching the sailing vessel (11). Therefore the lower platform (3) will proceed to sink into the water and move the motor vessel (10), leaving space free for the upper platform (31) to be able to sink in the water and separate the sailing vessel (11) from said upper platform (31).

In order to facilitate the lowering of the upper platform (31) on the lower one (3), a series of holes can be made in said upper platform (31) through which the cradles (2) and any other element projecting from the lower platform (3) enter upon lowering the upper platform (31) on the lower one (3). Both platforms (3,31) thus occupy less space and less draft is required to launch the upper vessel (10,11).

An improvement on the simple system is made by making the crossmembers (7) of the upper platforms (31) comprise telescopic arms (5) which allow placing the vessels (10,11) of the upper levels outside the vertical plane of the lower vessels (10,11). Thus the operations of launching and berthing the upper vessels (10,11) is allowed without moving the lower ones.

The telescopic arms (5) supporting each upper platform (31) have to be independent from the telescopic arms (5) horizontally supporting the contiguous upper platforms (31) even if they are supported on the same crossmember (7). In addition they must be resistant enough to allow supporting, at their extended end, a wet vessel (10,11) together with the upper platform (31) and other equipment.

The telescopic arm (5) is at least formed from one outer section (51) and one inner section (52), which can be extended and taken in by mechanical, pneumatic or hydraulic means. Figure 2 schematically depicts bearings (16) moved by motors (not depicted) making the outer section (51) of the telescopic arm (5) move forwards or backwards. The lower section in turn can, for example, have a similar system (not depicted).

In the case of the advanced embodiment, the use process varies according to the position of the vessel (10,11). In the case of vessels (10,11) placed on the lower platform (3), the previously described method for the simple embodiment will be used. It would be also possible to use telescopic arms (5) though it would only be advantageous if the structure (1) is on dry land or water wi:h little draft.

For launching or berthing the vessels (10,11) arranged in the upper platforms (31), it it will be necessary to extend the telescopic arms (5) before lowering the upper platform (31) by means of the cables (4) and berthing or launching the vessel (10,11).

According to this advanced configuration it is possible to increase the number of vertically placed platforms (3,31) given that it is not as much work to launch the vessels (10,11) of the upper levels.

In order to reduce or eliminate the stress appliec to the cables (4) and as a safety measure, it is convenient to place on the platform (3,31) fixing and supporting elements (8) automatically securing the platform (3,31) to the crossmembers (7) when said platforms (3,31) are placed in the position for storirg the vessels (10,11). Thus during the time in which said vessels (10,11) are berthed, which can last several months, the cables (4) will not be subjected to stress and will not wear out

The fixing and supporting elements (8) can be of several types, for example rods which project from the crossmembers (7) and can be horizontally moved to traverse part of the platform (3,31) or allow it to be supported on them. The movement of said rods can be pneumatic or mechanical.

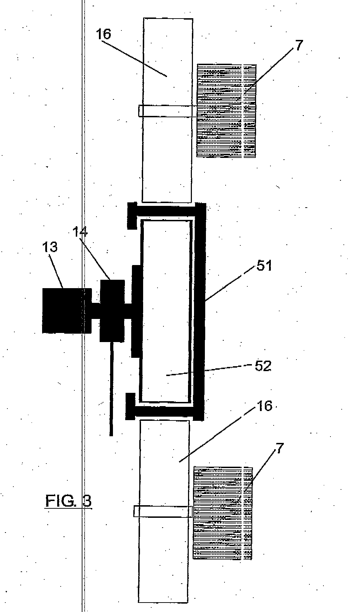

One way of installing the motor actuating the cable; (4) is shown in Figure 3, in which a winding device (14) anchored to the inner section (52) of the telescopic arm (5) can be observed (according to the simple embodiment form it would be directly anchored to the crossmember (7)). The winding device (14) can be a reel moved by a motor (13), or any equivalent element.

The winding device (14) of each cable (4) will have to be coordinated with the others in order to prevent the overturning of the platform (3,31). To that end a single control for feeding all the cables (4) to the motors (13) can be used or control devices (not depicted) can be installed in the platform (3,31) to ensure that the horizontalness is maintained at all times. These control devices would allow acting on individual motors (13) in order to correct inclinations, raising or lowering corners of the platform (3,31)

Possible improvements for the invention are described below:

First of all, for example, a washing/drying system (not depicted) for quickly washing/drying the hull of the vessels (10,11) can be included in the platforms (3-3',31-31'), by means of protecting fresh water (for washing off the salt water) and air (for drying the hull and preventing lower vessels (10,11) from getting wet), before definitively depositing the vessel (10,11) in its place of berthing. This washing system will be formed by a series of nozzles projecting water or air, together with fresh water piping from the dock (9) and the port and an air compressor. The maximum elements possible for the washing drying system would be fixed to :he structure (1) so as to not submerge them in the marine water together with the platform (3,31).

Another improvement consists of making the structure (1) have lifting elements for people such as stairs and pulleys, such that it allows accessing the vessels (10,11) for their habitability just as if they were berthed in water, but without the movements generated by the waves the port.

The vessels (10,11) will be introduced stern first into the platform (3,31), so as to ensure that their center of gravity, always closest to the stern, is perfectly comprised between the cradles (2) of the platform (3,31). Thus raising the vessel (10,11) is equally facilitated.

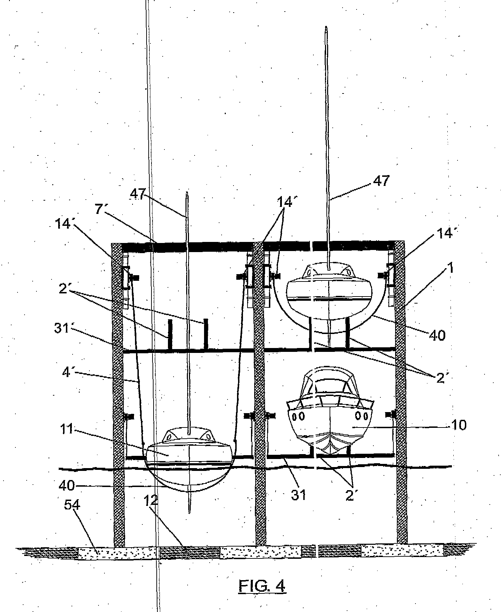

As can be seen in Figures 4 to 7, the raised marina can be formed from a structure (1) which can be metal, concrete or mixed, and a foundation (54) on a marine bottom (12) in the corresponding port, port bottom being understood as the bottom of the sea, lake, river, canal, reservoir, etc., where the port is located, the structure (1) being arranged in parallel and placed against a jetty or doc (9).

The structure (1) forms rectangular spaces for placing the corresponding vessels (10 and 11), the first of them as motor vessels and the second is as sailing vessels, leaving the corresponding mast (47) thereof to be seen. Evidently the crosswise sections of the structure (1) will be slightly larger than the width of the vessels (10 and 11), whereas the longer length of the rectangles will correspond with the girder of said vessels.

Upper platforms (31') are placed inside the structure (1) which are fixed for the sailing vessels (11), which platforms (31') have the corresponding cradles (2') for the support and rest of such sailing vessels (11), whereas lower platforms (3') which can be moved for the motor vessels (10) have been provided at the lower part, and which lower platforms (3') also have cradles (2') for supporting such vessels.

The features and particularities of the cradles have already been described in the object of the patent of the main invention in which the improvements of the invention as well as the shape of the actual platforms have been applied.

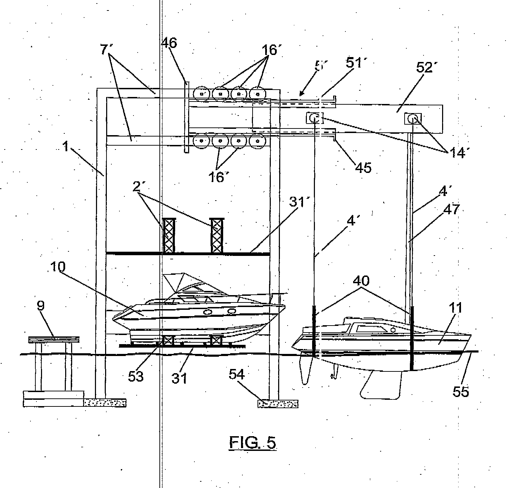

The columns forming the structure (1) are joined by crossmembers (7') between, which there are arranged at the upper part corresponding telescopic arms (5') formed by an outer section (51') and an inner section (52'), which can be moved axially therein-The outer section (51') moved on upper and lower bearings (16') provided precisely on the crossmembers (7'), as is clearly seen in Figure 5, with the particularity that the outer section (51') of the telescopic arms (5') has stops (45 and 46) at its ends to be able to move between the bearings (16'), all such that the outward movement of the outer section (51 ') in combination with the inward movement of the inner section (52') of these telescopic arms (5'), provides the length necessary to allow hoisting and/or berthing a sailing vessel (11), as depicted in Figure 5, such that the hoisting is carried out by means of cables (4') forming part of a hoisting system based on slings (40) encircling the sailing vessel (11) from below and picking it up to be able to raise and lower it from the corresponding upper platform (31') towan is or away from the seawater (551) in the event that it is to be berthed and/or launched.

So that the mast (47) of the sailing vessel (11) is not an obstacle for the system of slings (40-41) it has been provided that the bow cable (4') can be hooked/unhooked, i.e. it can be disassembled in relation to the sling (40) encircling the sailing vessel (11) from below for the purpose of first placing that sling (40) and then hooking the cable (4') in order to carry out the launching or berthing movements of the respective vessel, a movement carried out by means of a winding device (14') provided in the inner section (52') of the telescopic arm (5'), as is also clearly seen in Figure 5.

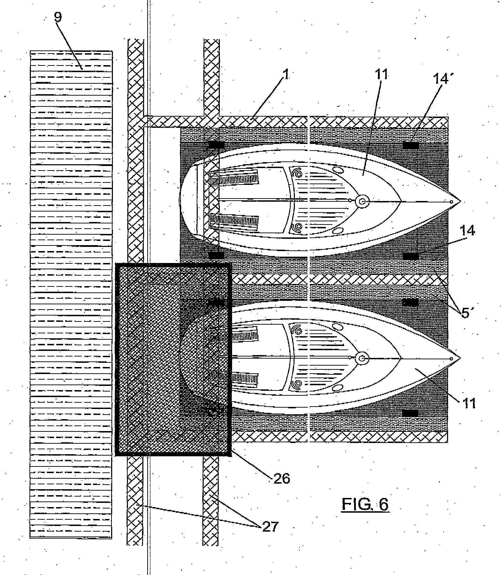

Figure 6 shows how beam paths (27) for the corresponding moving element (26) responsible for hoisting the respective sailing vessel (11) are provided on the structure (1), also showing the telescopic arms (5') and the winding device (14') arranged therein.

Although it has been said that the upper platforms (31') for the sailing vessels (11) are fixed on the structure (1), they can also be moved upwardly and downwardly like the lower platforms (3') for the motor vessels (10), the latter being able to be equally berthed and launched by means of the previously described system of slings.

As is obvious, the movements for raising and lowering the sailing vessels (11) will be carried out provided that the telescopic arms (5') are in an extendable position, for the purpose that in these movements of the sailing vessel (11) neither scrapes nor scratches against any element of the structure or with other components of the system occur.

The projection angle of the corresponding cables (4') of the system of slings must be as vertical as possible in order to maintain the vessel in suspension, such that it does not transmit horizontal stress to the telescopic arms (5'), so that once tensed it can be fixed with easily adjustable rigid separators for the mentioned cables.

It also must be stated that the raised marina of the invention can include additional services, such as habitability of the vessels in berthing position, to that end having lifting elements to be able to access the vessels and cleaning means by means of equipment for washing with fresh water and for drying, thus reducing the corrosion of the hull even more, since it is dry in the raised marina, the vessel is sufficiently out of the water and therefore the life of the hull is much greater than when it is floating in the sea.

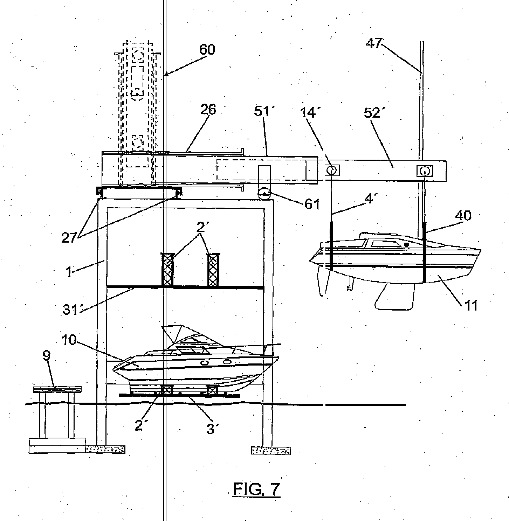

Figure 7 depicts a side view of the raised marina in which the mentioned traveling crane is included comprising a moving element (26) which moves on respective guide beams (27).

The traveling crane can be installed in an assemb y of two telescopic arms (5') similar to those previously described and which equally carries out its functions, or a telescopic crane (60), as those installed in self-loading trucks or automotive cranes and which by means of a rocker arm and slings can mover the vessel from its storage platform to the port water and vice versa. To improve the performance of the crane or of the telescopic arms, supports (61) will be arranged in both solutions on the outer edge of the structure demarcating each berthing, such that the transmitted stress is less.

Finally it must be highlighted that the structure described and shown in the figures only relates to the berthing column unit, it being possible to install alignments formed by a plurality of said units.

## Claims

1. A raised marina of the type including a structure (1) of columns having a plurality of crossmembers (7-7') on which a lower platform (3) is supported and at least one upper platform (31) vertically aligned with the lower platform (3-3') for supporting vessels (10,11), **characterized in that** the structure (1) is located on a marine bottom (12) with enough draft for launching the vessels (10,11) a id **in that** the crossmembers (7-7') of the upper platforms (31-31') comprise extendable telescopic arms (5-5') which move the upper platforms (31-31') horizontally outside the vertical plane of the motor vessels (10) located on the platforms (3-3', 31-31') located below.

2. A raised marina according to claim 1, **characterized in that** the platforms (3,31) can be moved at least vertically.

3. A raised marina according to claim 1, **characterized in that** the upper platform (31) can be coupled to the lower platform (3) by means of a series of holes arranged in said upper platform (31) opposing all elements projecting from the lower platform (3) and of a size equal to or smaller than said projecting elements.

4. A raised marina according to claims 1 to 3, **characterized in that** the crossmembers (7) comprise fixing and supporting elements (8) for fixing and supporting the platforms (3,31).

5. A raised marina according to claim 1, **characterized in that** at least the upper platforms (31') for the sailing vessels (11) are assembled in a fixed manner on the general structure (1), a system of slings (40) being provided which in combination with the corresponding hoisting cables (4') performs the lifting, lowering movements of the sailing vessels (11), of the motor vessels (10) where applicable, for the berthing and launching thereof, the cables (4') of the system of slings being associated to winding devices (14') provided in the telescopic arms (5').

6. A raised marina according to claim 5, **characterized in that** the telescopic arms (5') are assembled on crossmembers (7'), said telescopic arms (5') comprising an outer section (51') which can be moved on bearings (16') provided in the crossmembers (7') and an inner section (52') which can be moved axially in relation to the outer section (51'), the latter having stops (46) and (47) at its ends for its limited movements on its bearings (16'), the winding devices (14') of the cables (4') belonging to the system of slings being linked to a movable inner secti on (52').

7. A raised marina according to claims 5 and 6, cha racterized in that the cables (4') connected to the slings (40) corresponding to the bow cf the sailing vessel (11) can be hooked and unhooked in order to overcome the obstacle which the masts (47) of the sailing vessels (11) involve.

8. A raised marina according to claims 5 to 7, **characterized in that** the hoisting system formed by cables (4') and the slings (40) with the winding devices (14'), as well as the telescopic arms (5'), can be actuated by means of remote controls.

9. A raised marina according to claims 5 to 8, **characterized in that** pairs of collapsible metal lattice can be assembled on the telescopic arms (5'), the length of such lattice corresponds to the semi-width of the berthing, said metal lattices automatically deploying order to be joined to one another.

10. A raised marina according to claims 5 to 9, **characterized in that** the structure (1) includes gu beams (27) by way of a traveling crane for assembling a lifting element which allows hoisting all the vessels with the same berthing alignment, which can be conveniently moved until stopping above the site of the vessel.

11. A raised marina according to any of the previous claims, **characterized in that** the hoisting system can be made by an amphibious lifting truck installed on the port bottom.

12. A raised marina according to any of the previous claims, **characterized in that** the structure (1) comprises lifting elements allowing people and objects to access the vessels (10,11)

13. A raised marina according to any of the previous claims, **characterized in that** it comprises equipment for washing with fresh water and drying the hulls of the vessels (10,11).

14. A raised marina according to any of the previous claims, **characterized in that** it comprises drinking water inlets and electrical power outlets on the structure (1) itself for filling tanks and recharging the batteries of the actual vessels.

15. A raised marina according to any of the previous claims, **characterized in that** the structure (1) has hooking parts for fixing canvases or plastic for covering the vessels (10-11).
